(19) **Europäisches Patentamt European Patent Office Office européen des brevets**

(11) **EP 4 389 549 B1**

(12) **EUROPEAN PATENT SPECIFICATION**

(45) Date of publication and mention
of the grant of the patent:
**06.08.2025  Bulletin 2025/32**

(21) Application number: **23219561.0**

(22) Date of filing: **21.12.2023**

(51) International Patent Classification (IPC):
**B60W 40/06** (2012.01)

(52) Cooperative Patent Classification (CPC):
**B60W 40/06;** B60W 2050/0055; B60W 2050/0056;
B60W 2050/0057; B60W 2422/70

(54) **ROAD CONDITION DETERMINING DEVICE, ROAD CONDITION DETERMINING METHOD, AND COMPUTER-READABLE STORAGE MEDIUM**

STRASSENZUSTANDSBESTIMMUNGSVORRICHTUNG, STRASSENZUSTANDSBESTIMMUNGSVERFAHREN UND COMPUTERLESBARES SPEICHERMEDIUM

DISPOSITIF DE DÉTERMINATION DE L'ÉTAT DE LA ROUTE, PROCÉDÉ DE DÉTERMINATION DE L'ÉTAT DE LA ROUTE ET SUPPORT D'INFORMATIONS LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2022  CN 202211661459**

(43) Date of publication of application:
**26.06.2024  Bulletin 2024/26**

(73) Proprietor: **Nio Technology (Anhui) Co., Ltd Hefei City, Anhui 230601 (CN)**

(72) Inventors:
• **ZHANG, Dingzhi**
  **Anhui, 230601 (CN)**
• **LUAN, Shuaiqi**
  **Anhui, 230601 (CN)**
• **HONG, Zongzhou**
  **Anhui, 230601 (CN)**

• **ZHANG, Zheng**
  **Anhui, 230601 (CN)**
• **WANG, Feng**
  **Anhui, 230601 (CN)**
• **SHEN, Zhen**
  **Anhui, 230601 (CN)**
• **LI, Xugang**
  **Anhui, 230601 (CN)**
• **ZHANG, Yan**
  **Anhui, 230601 (CN)**

(74) Representative: **Dr. Solf & Zapf Patent- und Rechtsanwalts PartG mbB Candidplatz 15 81543 München (DE)**

(56) References cited:
**DE-A1- 102004 024 951     DE-C2- 19 804 005 US-A1- 2019 359 203**

**Description**

## TECHNICAL FIELD

The invention relates to a road condition determining device for a vehicle, a road condition determining method, and a computer-readable storage medium that can be used for executing such a road condition determining method.

## BACKGROUND

A current intelligent suspension system is usually equipped with a semi-active suspension or an active suspension. This imposes a high requirement on an environmental perception capability of a vehicle. The vehicle is required to be able to accurately learn of a road condition in real time and transmit the road condition to a suspension control unit, so that the suspension control unit adjusts a suspension control strategy in real time based on road condition information. In view of this, the vehicle is usually provided with a plurality of or as many as possible high-precision environmental perception sensors, for example, a laser radar sensor and an optical camera, both of which undoubtedly increase hardware costs of the vehicle. In addition, a signal processing process for the high-precision environmental perception sensor needs to occupy a large number of computing resources of the vehicle. In particular, the optical camera needs to perceive unevenness of a ground based on an image recognition algorithm for a high computational load, to ensure computational accuracy.

Cited document (DE19804005C2) discloses an improved method for controlling a suspension apparatus for a vehicle which is capable of enhancing a boarding-on feeling and a running stability by increasing a boarding-on feeling and the road surface contact force of wheels based on the size of a road surface input and a control logic which is variable in accordance with a frequency. The method includes the steps of obtaining a displacement value by passing an acceleration value measured by a vehicle vertical acceleration sensor through an integration unit having the following Equation (1); and computing a predetermined road surface signal by using the acceleration and displacement value as shown in Equation (2).

Cited document (US 2019/0359203 A1) discloses that the road surface determining section 84 includes a high-pass filter (HPF) 840, a band-stop filter (BPF) 841, an absolute value calculating section 842, a low-pass filter (LPF) 844, and a coefficient determining section 846. As illustrated in FIG. 8, the wheel speed signal is inputted to the high-pass filter 840, and the low-pass filter 844 is provided in a stage subsequent to the high-pass filter 840. The vehicle can be configured to include a vertical G sensor for detecting an acceleration in a vertical direction of the vehicle. Then, the road surface determining section 84 can be configured to determine the road surface condition with reference to the vertical G signal indicative of the acceleration in the vertical direction.

## SUMMARY

Different aspects of the invention aim to provide an improved road condition determining device, a road condition determining method, and a computer-readable storage medium for executing such a method. According to the road condition determining device or method, a road condition for traveling of a vehicle can be accurately perceived with few computing resources of the vehicle being occupied.

In addition, the invention also aims to solve or alleviate other technical problems existing in the prior art.

The invention is defined by the independent claim(s). Preferable embodiments are defined by the dependent claims.

In the road condition determining method according to the invention, the road condition coefficient can be obtained based on a sensor signal with a low computational load, which can reduce software and hardware costs of the vehicle to some extent. In addition, both a high-frequency characteristic and a low-frequency characteristic of each wheel center vertical acceleration signal are kept, so that this case can be close to a real traveling condition of the vehicle.

## BRIEF DESCRIPTION OF DRAWINGS

The invention is illustrated in more detail below with reference to the accompanying drawings, in which

FIG. 1 is a schematic block diagram of a road condition determining device according to the invention;
FIG. 2 shows main steps of a road condition determining method according to the invention; and
FIG. 3 and FIG. 4 are block diagrams of main sub-steps of a road condition determining method respectively.

**DESCRIPTION OF EMBODIMENTS**

The following specific embodiments and the accompanying drawings are merely exemplary descriptions of the technical solutions of the invention, and should not be construed as the entirety of the invention or construed as limiting the technical solution of the invention.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well.

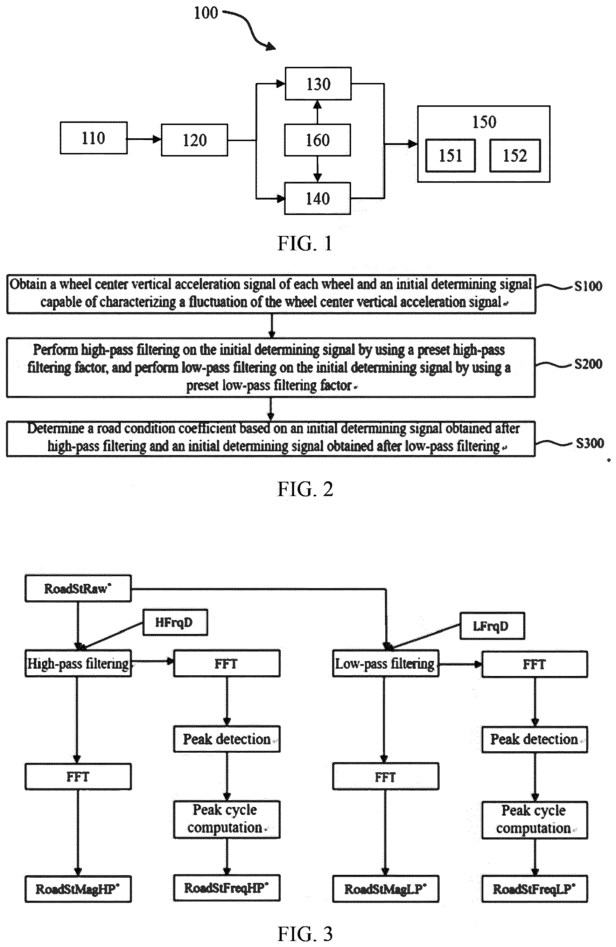

FIG. 1 and FIG. 2 show a road condition determining device for a vehicle according to an implementation and main steps of a road condition determining method executable by the road condition determining device respectively. The road condition determining device 100 includes an obtaining module 110, a preprocessing module 120, a high-pass filter 130, a low-pass filter 140, and a determining module 150. The preprocessing module 120 is located at a post-stage of the obtaining module 110, and is configured to preprocess a signal obtained by the obtaining module 110 for road condition determining. The low-pass filter 140 and the high-pass filter 130 are connected in parallel between the preprocessing module 120 and the determining module 150, so as to retain a high-frequency characteristic and a low-frequency characteristic of the signal respectively, which is closer to a real traveling environment of the vehicle than a series-connection manner. For example, a wheel center vertical acceleration signal on a gravel road has a high-frequency characteristic more significant than that on a gentle large-camber uneven road surface. The determining module 150 is located at a post-stage of the two filters, and is configured to determine a road condition coefficient based on a signal obtained after high-pass filtering and a signal obtained after low-pass filtering. The road condition coefficient may represent toughness of a road condition for traveling of the vehicle. A relationship (for example, positive correlation or negative correlation) between the road condition coefficient and the toughness of the road condition may be set based on a requirement or a suspension control logic.

Correspondingly, the road condition determining method according to the invention can be implemented by such a road condition determining device as follows.

First, a wheel center vertical acceleration signal of each wheel and an initial determining signal capable of characterizing a fluctuation of the wheel center vertical acceleration signal are obtained, which is step S100.

Then, high-pass filtering is performed by the high-pass filter on the initial determining signal by using a preset high-pass filtering factor, and low-pass filtering is performed by the low-pass filter on the initial determining signal by using a preset low-pass filtering factor, which is step S200.

Finally, a road condition coefficient is determined based on an initial determining signal obtained after high-pass filtering and an initial determining signal obtained after low-pass filtering, which is step S300.

Herein, road condition determining is performed based on an original device of the vehicle or a detected sensor signal instead of an additional high-precision environmental perception sensor, so that hardware costs of the vehicle can be reduced to some extent. In addition, compared with a complex image processing algorithm in the prior art, the road condition determining device and the road condition determining method are based on the wheel center vertical acceleration signal, and includes a computing process that needs only a low computational load, so that computing resources of the vehicle can be released.

The obtaining module 110 is configured to obtain the wheel center vertical acceleration signal of each wheel of the vehicle, that is, an acceleration signal of a wheel center in a vertical direction. Unevenness of a road surface on which the vehicle travels can directly reflect a bouncing motion of an unsprung mass. A wheel center vertical acceleration of the unsprung mass, that is, the "wheel", can be and is suitable for being used as a reference for determining the road condition for traveling of the vehicle. The obtaining module 110 can be communicatively connected to a vehicle data bus, so as to read and select, from the vehicle data bus, a related signal associated with the road condition. Alternatively, the obtaining module can be directly communicatively connected to a vehicle sensor, and compute the wheel center vertical acceleration signal based on a received related signal. Alternatively, on the vehicle with a wheel center vertical acceleration sensor, the obtaining module 110 can be directly communicatively connected to the wheel center vertical acceleration sensor, and invoke the detected wheel center vertical acceleration signal of each wheel.

Optionally, the related signal associated with the road condition can relate to the wheel vertical acceleration signal, a vehicle body vertical acceleration signal, a suspension compression displacement signal, a shock absorber stroke signal, and an inertial measurement unit signal. Correspondingly, combinations of the following sensors can be involved: a vertical acceleration sensor at a sprung vehicle body (for example, three vertical acceleration sensors are disposed, so as to obtain a vehicle body attitude parameter, for example, a vehicle body roll feature or a vehicle body pitch feature), a shock absorber stroke sensor at an unsprung shock absorber (for example, each shock absorber is provided with such a shock absorber stroke sensor), an inertial measurement unit sensor (for example, one) at the sprung vehicle body and the shock absorber stroke sensor at the unsprung shock absorber (for example, each shock absorber is provided with such a shock absorber stroke sensor), a vertical acceleration sensor (for example, three) at the sprung vehicle body, and a vertical acceleration sensor at a wheel center of an unsprung front wheel (for example, located at a front left wheel and a front right wheel respectively). It should be noted herein that selection or a combination manner of the related signal and selection or a combination manner of the involved sensors may be designed according to an existing vehicle configuration solution.

The preprocessing module 120 is configured to process the received wheel center vertical acceleration signal into the initial determining signal capable of characterizing the fluctuation of the wheel center vertical acceleration signal. Optionally, the initial determining signal represents a deviation value of each wheel center vertical acceleration at each moment or at each sampling point relative to an average wheel center vertical acceleration within a preset time period. The deviation value reflects a fluctuation of each wheel center vertical acceleration, and thus reflects a change of an uneven part of the road surface on which the vehicle travels. Herein, in one aspect, the preset time period can relate to historical sampled data. In this case, an arithmetic average of wheel center vertical accelerations at a plurality of sampling points within a continuously accumulated historical road length or historical traveling time period is obtained as an average wheel center vertical acceleration, and a difference between the average wheel center vertical acceleration and each wheel center vertical acceleration signal that is acquired in real time is computed to obtain the deviation value. Herein, a vehicle motion status signal can also be used, for example, a Boolean signal ("0" represents that the vehicle is still, and "1" represents that the vehicle is moving). A change of the Boolean signal indicates that a sampling point based on which the arithmetic average is computed is reset. In this case, it should be noted that a length of the preset time period needs to be set and adjusted based on required computational accuracy. In another aspect, the preset time period can alternatively relate to sampled data in a road condition determining process that is being performed. In this case, a difference between an arithmetic average of sampled data in a part of a sampling cycle or in an entire sampling cycle and the wheel center vertical acceleration at each moment can be computed to obtain the deviation value.

More specifically, before the initial determining signal is separately input into the high-pass filter 130 and the low-pass filter 140, the initial determining signal needs to be pre-filtered, so as to filter the signal and improve the computational accuracy. Based on this, the preprocessing module 120 further includes an additional low-pass filter (not shown) configured to perform low-pass filtering processing on the initial determining signal by using an initial filtering factor, particularly a preset initial filtering factor.

In general, the preprocessing module 120 performs the following process on the wheel center vertical acceleration signal of each wheel computed based on the related signal or directly read from the sensor: obtaining a deviation value of each wheel center vertical acceleration signal at each moment relative to an average wheel center vertical acceleration signal within the preset time period (which is sub-step S110); and performing low-pass filtering on the deviation value by using the preset initial filtering factor, to generate the initial determining signal (which is sub-step S120).

Optionally, the initial filtering factor of the additional low-pass filter, the high-pass filtering factor of the high-pass filter 130, and the low-pass filtering factor of the low-pass filter 140 can be preset and stored in corresponding computing units, or can be set and adjusted based on a vehicle status signal. The concept "filtering factor" is a critical frequency for filtering processing, and may also be referred to as a cut-off frequency. For example, during high-pass filtering, a part of the initial determining signal lower than the high-pass filtering factor is removed. Specifically, the road condition determining device according to the invention is further provided with a filtering factor determining module 160 capable of computing the foregoing three filtering factors based on the vehicle status signal, for example, a vehicle speed signal and a vehicle start/stop signal. The vehicle start/stop signal may be used for correcting the vehicle speed signal. A vehicle speed is closely related to bouncing and the wheel center vertical acceleration of the wheel. For example, on a same uneven road surface, the wheel at a high vehicle speed bounces more violently than that at a low vehicle speed. Therefore, determining of at least one of the foregoing three filtering factors based on the vehicle speed, particularly determining of the foregoing three filtering factors based on the vehicle speed, can be facilitated.

More specifically, the initial filtering factor *FrqD,* the high-pass filtering factor *HFrqD,* and the low-pass filtering factor *LFrqD* can be determined according to the following formula (1):

$$
\begin{cases}
FrqD = min\{k_{FrqD} * v, FrqD_M\} \\
HFrqD = max\{k_{HFrqD} * v, HFrqD_M\} \qquad (1) \\
\quad LFrqD = k_{LFrqD} * v
\end{cases}
$$

*v* is the vehicle speed.

$k_{FrqD}$, $k_{HFrqD}$, $k_{LFrqD}$, $FrqD_M$, and $HFrqD_M$ are preset constants. The low-pass filtering factor *LFrqD* is in proportion to the vehicle speed *v*. The high-pass filtering factor *HFrqD* is set by computing a maximum value. The initial filtering factor *FrqD* is obtained by computing a minimum value.

According to the invention, the determining module 150 includes an analysis submodule 151 and a coefficient determining submodule 152. The analysis submodule 151 is configured to obtain, through Fourier analysis, for example, through fast Fourier transform, an amplitude and a frequency of the initial determining signal obtained after high-pass filtering and an amplitude and a frequency of the initial determining signal obtained after low-pass filtering respectively. Specifically, the analysis submodule 151 obtains, through fast Fourier transform, a first amplitude and a first frequency of the initial determining signal obtained by the high-pass filter by performing high-pass filtering, and obtains, through fast Fourier transform, a second amplitude and a second frequency of the initial determining signal obtained by the low-pass filter by performing low-pass filtering. The coefficient determining submodule 152 is configured to obtain the road condition coefficient based on the amplitudes and the frequencies. The analysis submodule 151 computes, for the wheel center vertical acceleration of each wheel, an amplitude and a frequency of the wheel center vertical acceleration. Then, the coefficient determining submodule 152 determines a lateral road condition coefficient on each side of the vehicle based on the amplitude and the frequency, so as to obtain an overall road condition coefficient of the vehicle.

More specifically, step S300 performed by the determining module 150 includes the following sub-steps.

S310: Through Fourier analysis, obtain the first amplitude and the first frequency of the initial determining signal obtained after high-pass filtering, and obtain the second amplitude and the second frequency of the initial determining signal obtained after low-pass filtering.

S320: Seek for a first amplitude, a first frequency, a second amplitude, and a second frequency of each same-side wheel on a same side of the vehicle, and determine a lateral road condition coefficient on each side of the vehicle based on the first amplitude, the first frequency, the second amplitude, and the second frequency.

S330: Compute a weighted average of the lateral road condition coefficient on each side of the vehicle as the road condition coefficient.

Herein, sub-step S310 is performed in the analysis submodule 151, and sub-steps S320 and S330 are performed in the coefficient determining submodule 152. In sub-steps S320 and S330, the amplitude and the frequency of each wheel on the same side may be integrated, through secondary computation (for example, addition of a user-defined function and weighted averaging), into the lateral road condition coefficient capable of reflecting a road condition on this side, and then all lateral road condition coefficients are integrated, through secondary computation (for example, addition of a user-defined function and weighted averaging), into the overall road condition coefficient that can be used for a suspension control system. Herein, a four-wheel vehicle may include a left side and a right side, and wheels can be divided into left-side wheels (including a front left wheel and a rear left wheel) and right-side wheels (including a front right wheel and a rear right wheel). This will be described in more detail below.

More specifically, obtaining of each lateral road condition coefficient can be implemented through the following sub-steps.

S321: Obtain an amplitude average of the first amplitude and the second amplitude of each same-side wheel, and obtain a frequency average of the first frequency and the second frequency of each same-side wheel.

S322: Compute a weighted average of the amplitude average of each same-side wheel as a weighted amplitude, and compute a weighted average of the frequency average of each same-side wheel as a weighted frequency.

S323: Compute a root mean square of a product of the weighted amplitude and the weighted frequency as the lateral road condition coefficient.

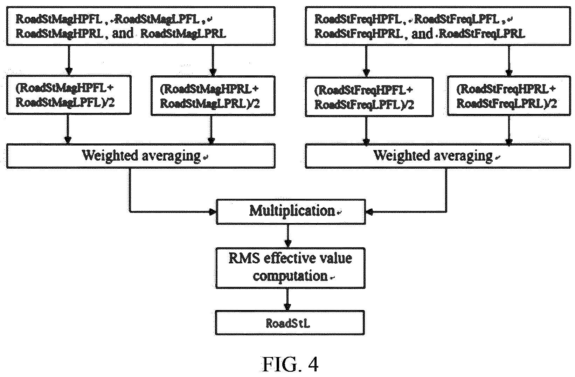

It should be noted herein that the road condition determining device, the road condition determining method, and a computer-readable storage medium according to the invention can be applied to different types of vehicles, where differences rely on different hardware configurations, including different numbers of axles, different numbers of wheels, and the like. For ease of understanding, a specific implementation of the road condition determining method is described based on the four-wheel vehicle in detail below with reference to FIG. 3 and FIG. 4.

First, the obtaining module 110 of the road condition determining device reads the following signals from the vehicle data bus: vehicle body vertical acceleration signals over the four wheels, denoted as TMAZ* (including TMAZFL, TMAZFR, TMAZRL, and TMAZRR), and four suspension compression signals on a suspension, denoted as WhlZ* (including WhlZFL, WhlZFR, WhlZRL, and WhlZRR). Second-order derivative computation is performed on the suspension compression signal WhlZ*, and a difference between the suspension compression signal and the vehicle body vertical acceleration signal TMAZ* is computed to obtain a wheel center vertical acceleration signal of each wheel, denoted as RoadStSig* (including RoadStSigFL, RoadStSigFR, RoadStSigRL, and RoadStSigRR). It should be noted that a suffix "FL" in a sign used herein or hereinafter represents the front left wheel of the vehicle, "FR" represents the front right wheel of the vehicle, "RL" represents the rear left wheel of the vehicle, and "RR" represents the rear right wheel of the vehicle.

Then, the preprocessing module 120 of the road condition determining device computes a difference between the wheel center vertical acceleration signal RoadStSig* of each wheel and an average wheel center vertical acceleration signal RoadStSig*', so as to obtain a deviation value ∆RoadStSig*. Then, the additional low-pass filter performs low-pass filtering on ∆RoadStSig* by using the initial filtering factor *FrqD,* so as to obtain an initial determining signal RoadStRaw* (including RoadStRawFL, RoadStRawFR, RoadStRawRL, and RoadStRawRR).

Then, a related amplitude and frequency are obtained the initial determining signal RoadStRaw* with reference to FIG. 3. In one aspect, the high-pass filter 130 performs high-pass filtering on the initial determining signal RoadStRaw* by using the high-pass filtering factor *HFrqD,* then obtains, through fast Fourier transform (FFT for short), a first amplitude RoadStMagHP* (including RoadStMagHPFL, RoadStMagHPFR, RoadStMagHPRL, and RoadStMagHPRR) after high-pass filtering, and obtains, through fast Fourier transform, peak detection, and peak cycle computation, a first frequency RoadStFreqHP* (including RoadStFreqHPFL, RoadStFreqHPFR, RoadStFreqHPRL, and RoadStFreqHPRR) after high-pass filtering. In another aspect, the low-pass filter 140 simultaneously performs low-pass filtering on the initial determining signal RoadStRaw* by using the low-pass filtering factor *LFrqD,* then obtains, through fast Fourier transform, a second amplitude RoadStMagLP* (including RoadStMagLPFL, RoadStMagLPFR, RoadStMagLPRL, and RoadStMagLPRR) after low-pass filtering, and obtains, through fast Fourier transform, peak detection, and peak cycle computation, a second frequency RoadStFreqLP* (including RoadStFreqLPFL, RoadStFreqLPFR, RoadStFreqLPRL, and RoadStFreqLPRR) after low-pass filtering. In this process, the foregoing computation needs to be separately performed on initial determining signals RoadStRawFL, RoadStRawFR, RoadStRawRL, and RoadStRawRR of the wheels.

Then, the coefficient determining submodule 152 of the road condition determining device computes a road condition coefficient the received RoadStMagHP*, RoadStFreqHP*, RoadStMagLP*, and RoadStFreqLP* with reference to FIG. 4. First, the foregoing parameters are divided. To be specific, the foregoing parameters of the front left wheel and the rear left wheel are divided into a first group, and the foregoing parameters of the front right wheel and the rear right wheel are divided into a second group. Based on this, lateral road condition coefficients on the left side of the vehicle and the right side of the vehicle are computed respectively. Obtaining of the lateral road condition coefficient on the left side is now used as an example for description.

Weighted averaging is performed on a mathematical average of the first amplitude RoadStMagHPFL and the second amplitude RoadStMagLPFL of the front left wheel and a mathematical average of the first amplitude RoadStMagHPRL and the second amplitude RoadStMagLPRL of the rear left wheel, to obtain a weighted amplitude of the left side of the vehicle. In addition, weighted averaging is performed on a mathematical average of the first frequency RoadStFreqHPFL and the second frequency RoadStFreqLPFL of the front left wheel and a mathematical average of the first frequency RoadStFreqHPRL and the second frequency RoadStFreqLPRL of the rear left wheel, to obtain a weighted frequency of the left side of the vehicle. Root mean square (RMS) effective value computation is performed on a product of the weighted amplitude and the weighted frequency. RMS effective value computation is performed particularly within a preset sampling time period (for example, when there are 100 sampling points). The lateral road condition coefficient RoadStL on the left side of the vehicle is obtained based on an obtained root mean square. In addition, a lateral road condition coefficient RoadStR on the right side of the vehicle is obtained in the same manner.

Finally, weighted average computation is performed on the two lateral road condition coefficients RoadStL and RoadStR, to obtain the road condition coefficient RoadSt* that can be output to the suspension control system of the vehicle. Herein, respective weight coefficients of RoadStL and RoadStR can be preset based on a test, or can be adaptively adjusted based on a running mode of the vehicle, for example, turning. In addition, the two lateral road condition coefficients RoadStL and RoadStR may alternatively be directly transmitted to the suspension control system, which is particularly advantageous in a case in which the vehicle turns or road conditions on the left and right sides are greatly different.

In conclusion, in the road condition determining method according to the invention, the road condition coefficient is obtained based on a sensor signal with a low computational load, which can reduce software and hardware costs of the vehicle to some extent. In addition, both a high-frequency characteristic and a low-frequency characteristic of each wheel center vertical acceleration signal are kept, so that this case can be close to a real traveling condition of the vehicle. In an implementation of the invention, a critical frequency in each filtering process is set and adjusted based on the vehicle speed, so that interference caused by the vehicle speed to road condition determining can be eliminated. The weighted average of the lateral road condition coefficients on the left side of the vehicle and the right side of the vehicle is used as the road condition coefficient, so that there is a probability of matching a running status of the vehicle, and a targeted reference can be provided for the suspension control system of the vehicle.

Finally, the invention further relates to a computer-readable storage medium for implementing the road condition determining method for a vehicle according to one or more embodiments of the invention. The computer-readable storage medium mentioned herein includes various types of computer storage media, and may be any usable medium accessible to a general-purpose or special-purpose computer. For example, the computer-readable storage medium may include a RAM, a ROM, an EPROM, an E2PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. For descriptions about the computer-readable storage medium according to the invention, reference can be made to the descriptions about the road condition determining device or the road condition determining method according to the invention, and details are not described herein again.

## Claims

1. A road condition determining device (100), comprising:

   an obtaining module(110) configured to obtain a wheel center vertical acceleration signal of each wheel of a vehicle;

   a preprocessing module(120) disposed at a post-stage of the obtaining module and configured to preprocess each of the wheel center vertical acceleration signal to obtain an initial determining signal capable of characterizing a fluctuation of the wheel center vertical acceleration signal;

   a high-pass filter(130) disposed at a post-stage of the preprocessing module and configured to perform high-pass filtering on the initial determining signal by using a high-pass filtering factor;

   a low-pass filter(140) disposed at a post-stage of the preprocessing module in parallel with the high-pass filter and configured to perform low-pass filtering on the initial determining signal by using a low-pass filtering factor; and

   a determining module(150) configured to determine a road condition coefficient based on an initial determining signal obtained after low-pass filtering and an initial determining signal obtained after high-pass filtering;

   the determining module(150) comprises an analysis submodule(151) and a coefficient determining submodule(152), wherein the analysis submodule(151) is configured to obtain, through Fourier analysis, a first amplitude and a first frequency of the initial determining signal obtained after high-pass filtering and a second amplitude and a second frequency of the initial determining signal obtained after low-pass filtering; and the coefficient determining submodule(152) is configured to determine the road condition coefficient based on the first amplitude, the first frequency, the second amplitude, and the second frequency.

2. The road condition determining device(100) according to claim 1, wherein the obtaining module(110) is connected to a vehicle data bus, and selects a related signal associated with a road condition from the vehicle data bus; the obtaining module(110) computes the wheel center vertical acceleration signal of each wheel based on the related signal; and the related signal is selected from the following group: a vehicle body vertical acceleration signal, a shock absorber stroke signal, an inertial measurement unit signal, and a wheel vertical acceleration signal.

3. The road condition determining device(100) according to any one of claims 1 to 2, wherein the preprocessing module(120) comprises an additional low-pass filter configured to perform, before the initial determining signal is output to the low-pass filter(140) and the high-pass filter(130), low-pass filtering on the initial determining signal by using an initial filtering factor.

4. The road condition determining device(100) according to claim 3, further comprising a filtering factor determining module(160) configured to set the initial filtering factor, the high-pass filtering factor, and the low-pass filtering factor based on a vehicle status signal, wherein the vehicle status signal comprises a vehicle speed signal and a vehicle start/stop signal.

5. The road condition determining device(100) according to claim 4, wherein the filtering factor determining module(160) is configured to determine the initial filtering factor, the high-pass filtering factor, and the low-pass filtering factor according to the following formula:

$$\begin{cases} FrqD = min\{k_{FrqD} * v, FrqD_M\} \\ HFrqD = max\{k_{HFrqD} * v, HFrqD_M\} \\ LFrqD = k_{LFrqD} * v \end{cases}$$

   wherein *FrqD* is the initial filtering factor;
   *HFrqD* is the high-pass filtering factor;
   *LFrqD* is the low-pass filtering factor;
   *v* is a vehicle speed; and
   $k_{FrqD}$, $k_{HFrqD}$, $k_{LFrqD}$, $FrqD_M$, and $HFrqD_M$ are preset constants.

6. A road condition determining method, executable by the road condition determining device(100) according to any one of claims 1 to 5, wherein the method comprises the following steps:

   S100: obtaining a wheel center vertical acceleration signal of each wheel and an initial determining signal capable of characterizing a fluctuation of the wheel center vertical acceleration signal;

S200: performing high-pass filtering on the initial determining signal by using a preset high-pass filtering factor, and performing low-pass filtering on the initial determining signal by using a preset low-pass filtering factor; and

S300: determining a road condition coefficient based on an initial determining signal obtained after high-pass filtering and an initial determining signal obtained after low-pass filtering;

wherein step S300 comprises the following sub-steps:

S310: through Fourier analysis, obtaining a first amplitude and a first frequency of the initial determining signal obtained after high-pass filtering, and obtaining a second amplitude and a second frequency of the initial determining signal obtained after low-pass filtering;

S320: seeking for a first amplitude, a first frequency, a second amplitude, and a second frequency of each same-side wheel on a same side of a vehicle, and determining a lateral road condition coefficient on each side of the vehicle based on the first amplitude, the first frequency, the second amplitude, and the second frequency; and

S330: computing a weighted average of the lateral road condition coefficient on each side of the vehicle as the road condition coefficient.

7. The road condition determining method according to claim 6, wherein step S100 comprises the following sub-steps:

S 110: obtaining a deviation value of each wheel center vertical acceleration signal at each moment relative to an average wheel center vertical acceleration signal within a preset time period; and

S 120: performing low-pass filtering on the deviation value by using a preset initial filtering factor, to generate the initial determining signal.

8. The road condition determining method according to claim 6, wherein sub-step S320 comprises the following steps:

S321: obtaining an amplitude average of the first amplitude and the second amplitude of each same-side wheel, and obtaining a frequency average of the first frequency and the second frequency of each same-side wheel;

S322: computing a weighted average of the amplitude average of each same-side wheel as a weighted amplitude, and computing a weighted average of the frequency average of each same-side wheel as a weighted frequency; and

S323: computing a root mean square of a product of the weighted amplitude and the weighted frequency as the lateral road condition coefficient.

9. A computer-readable storage medium having a computer program stored thereon, wherein when the computer program is executed by a processor, a road condition determining method according to any one of claims 6 to 8 is implemented.

**Patentansprüche**

1. Straßenzustandsbestimmungsvorrichtung (100), die Folgendes umfasst:

ein Erhaltemodul (110), ausgelegt zum Erhalten eines vertikalen Radmitten-Beschleunigungssignals jedes Rades des Fahrzeugs;

ein Vorverarbeitungsmodul (120), angeordnet an einer Nachstufe des Erhaltemoduls und ausgelegt zum Vorverarbeiten jedes der vertikalen Radmitten-Beschleunigungssignale zum Erhalten eines anfänglichen Bestimmungssignals, das in der Lage ist, eine Fluktuation des vertikalen Radmitten-Beschleunigungssignals zu charakterisieren;

einen Hochpassfilter (130), angeordnet an einer Nachstufe des Vorverarbeitungsmoduls und ausgelegt zum Durchführen einer Hochpassfilterung auf dem anfänglichen Bestimmungssignal unter Verwendung eines Hochpassfilterungsfaktors;

einen Tiefpassfilter (140), angeordnet an einer Nachstufe des Vorverarbeitungsmoduls parallel zum Hochpassfilter und ausgelegt zum Durchführen einer Tiefpassfilterung auf dem anfänglichen Bestimmungssignal unter Verwendung eines Tiefpassfilterungsfaktors; und

ein Bestimmungsmodul (150), ausgelegt zum Bestimmen eines Straßenzustandskoeffizienten basierend auf einem anfänglichen Bestimmungssignal, das nach der Tiefpassfilterung erhalten wird, und einem anfänglichen Bestimmungssignal, das nach der Hochpassfilterung erhalten wird;

wobei das Bestimmungsmodul (150) ein Analyseuntermodul (151) und ein Koeffizientenbestimmungsuntermodul (152) umfasst, wobei das Analyseuntermodul (151) ausgelegt ist zum Erhalten, durch Fourier-Analyse, einer ersten Amplitude und einer ersten Frequenz des anfänglichen Bestimmungssignals, das nach der Hochpassfilterung erhalten wird, und einer zweiten Amplitude und einer zweiten Frequenz des anfänglichen Bestimmungssignals, das nach der Tiefpassfilterung erhalten wird; und

wobei das Koeffizientenbestimmungsuntermodul (152) ausgelegt ist zum Bestimmen des Straßenzustandskoeffizienten basierend auf der ersten Amplitude, der ersten Frequenz, der zweiten Amplitude und der zweiten Frequenz.

2. Straßenzustandsbestimmungsvorrichtung (100) nach Anspruch 1, wobei das Erhaltemodul (110) mit einem Fahrzeugdatenbus verbunden ist und ein zugehöriges Signal im Zusammenhang mit einem Straßenzustand vom Fahrzeugdatenbus auswählt; wobei das Erhaltemodul (110) das vertikale Radmitten-Beschleunigungssignal jedes Rades basierend auf dem zugehörigen Signal berechnet; und wobei das zugehörige Signal aus der folgenden Gruppe ausgewählt wird: einem vertikalen Fahrzeugkarosserie-Beschleunigungssignal, einem Stoßdämpfer-Stoßsignal, einem Trägheitsmesseinheitssignal und einem vertikalen Radbeschleunigungssignal.

3. Straßenzustandsbestimmungsvorrichtung (100) nach einem der Ansprüche 1 bis 2, wobei das Vorverarbeitungsmodul (120) einen zusätzlichen Tiefpassfilter umfasst, der ausgelegt ist zum Durchführen, bevor das anfängliche Bestimmungssignal an den Tiefpassfilter (140) und den Hochpassfilter (130) ausgegeben wird, von Tiefpassfilterung auf dem anfänglichen Bestimmungssignal unter Verwendung eines anfänglichen Filterungsfaktors.

4. Straßenzustandsbestimmungsvorrichtung (100) nach Anspruch 3, ferner umfassend ein Filterungsfaktorbestimmungsmodul (160), das ausgelegt ist zum Festlegen des anfänglichen Filterungsfaktors, des Hochpassfilterungsfaktors und des Tiefpassfilterungsfaktors basierend auf einem Fahrzeugstatussignal, wobei das Fahrzeugstatussignal ein Fahrzeuggeschwindigkeitssignal und ein Fahrzeug-Start/Stopp-Signal umfasst.

5. Straßenzustandsbestimmungsvorrichtung (100) nach Anspruch 4, wobei das Filterungsfaktorbestimmungsmodul (160) ausgelegt ist zum Bestimmen des anfänglichen Filterungsfaktors, des Hochpassfilterungsfaktors und des Tiefpassfilterungsfaktors entsprechend der folgenden Formel:

$$\begin{cases} FrqD = min\{k_{FrqD} * v, FrqD_M\} \\ HFrqD = max\{k_{HFrqD} * v, HFrqD_M\} \\ LFrqD = k_{LFrqD} * v \end{cases}$$

wobei $FrqD$ der anfängliche Filterungsfaktor ist;
$HFrqD$ der Hochpassfilterungsfaktor ist;
$LFrqD$ der Tiefpassfilterungsfaktor ist;
v eine Fahrzeuggeschwindigkeit ist; und
$k_{FrqD}$, $k_{HFrqD}$, $k_{LFrqD}$, $FrqD_M$ und $HFrqD_M$ voreingestellte Konstanten sind.

6. Straßenzustandsbestimmungsverfahren, ausführbar durch die Straßenzustandsbestimmungsvorrichtung (100) nach einem der Ansprüche 1 bis 5, wobei das Verfahren die folgenden Schritte umfasst:

S100: Erhalten eines vertikalen Radmitten-Beschleunigungssignals jedes Rades und eines anfänglichen Bestimmungssignals, das in der Lage ist, eine Fluktuation des vertikalen Radmitten-Beschleunigungssignals zu charakterisieren;

S200: Durchführen von Hochpassfilterung auf dem anfänglichen Bestimmungssignal unter Verwendung eines voreingestellten Hochpassfilterungsfaktors, und Durchführen von Tiefpassfilterung auf dem anfänglichen Bestimmungssignal unter Verwendung eines voreingestellten Tiefpassfilterungsfaktors; und

S300: Bestimmen eines Straßenzustandskoeffizienten basierend auf einem anfänglichen Bestimmungssignal, das nach der Hochpassfilterung erhalten wird, und einem anfänglichen Bestimmungssignal, das nach der Tiefpassfilterung erhalten wird;

wobei Schritt S300 die folgenden Teilschritte umfasst:

S310: durch Fourier-Analyse, Erhalten einer ersten Amplitude und einer ersten Frequenz des anfänglichen Bestimmungssignals, das nach der Hochpassfilterung erhalten wird, und Erhalten einer zweiten Amplitude und einer zweiten Frequenz des anfänglichen Bestimmungssignals, das nach der Tiefpassfilterung erhalten wird;

S320: Suchen nach einer ersten Amplitude, einer ersten Frequenz, einer zweiten Amplitude und einer zweiten Frequenz jedes Rades auf einer gleichen Seite eines Fahrzeugs, und Bestimmen eines lateralen Straßenzustandskoeffizienten auf jeder Seite des Fahrzeugs basierend auf der ersten Amplitude, der ersten Frequenz, der zweiten Amplitude und der zweiten Frequenz; und

S330: Berechnen eines gewichteten Durchschnitts des lateralen Straßenzustandskoeffizienten auf jeder Seite des Fahrzeugs als den Straßenzustandskoeffizienten.

7. Straßenzustandsbestimmungsverfahren nach Anspruch 6, wobei Schritt S100 die folgenden Teilschritte umfasst:

S110: Erhalten eines Abweichungswerts jedes vertikalen Radmitten-Beschleunigungssignals in jedem Moment relativ zu einem durchschnittlichen vertikalen Radmitten-Beschleunigungssignals innerhalb einer voreingestellten Zeitspanne; und

S120: Durchführen von Tiefpassfilterung auf dem Abweichungswert unter Verwendung eines voreingestellten anfänglichen Filterungsfaktors zum Erzeugen des anfänglichen Bestimmungssignals.

8. Straßenzustandsbestimmungsverfahren nach Anspruch 6, wobei Teilschritt S320 die folgenden Schritte umfasst:

S321: Erhalten eines Amplitudendurchschnitts der ersten Amplitude und der zweiten Amplitude jedes Rades auf einer gleichen Seite, und Erhalten eines Frequenzdurchschnitts der ersten Frequenz und der zweiten Frequenz jedes Rades auf einer gleichen Seite;

S322: Berechnen eines gewichteten Durchschnitts des Amplitudendurchschnitts jedes Rades auf einer gleichen Seite als eine gewichtete Amplitude, und Berechnen eines gewichteten Durchschnitts des Frequenzdurchschnitts jedes Rades auf einer gleichen Seite als eine gewichtete Frequenz; und

S323: Berechnen eines quadratischen Mittels eines Produkts der gewichteten Amplitude und der gewichteten Frequenz als den lateralen Straßenzustandskoeffizienten.

9. Computerlesbares Speichermedium mit einem darauf gespeicherten Computerprogramm, wobei, wenn das Computerprogramm durch einen Prozessor ausgeführt wird, ein Straßenzustandsbestimmungsverfahren nach einem der Ansprüche 6 bis 8 umgesetzt wird.

**Revendications**

1. Dispositif (100) de détermination de l'état de la route, comprenant :

un module d'obtention (110) configuré pour obtenir un signal d'accélération verticale de centre de roue de chaque roue d'un véhicule ;

un module de prétraitement (120) agencé en aval du module d'obtention et configuré pour prétraiter chaque signal d'accélération verticale de centre de roue afin d'obtenir un signal de détermination initial susceptible de caractériser une fluctuation du signal d'accélération verticale de centre de roue ;

un filtre passe-haut (130) agencé en aval du module de prétraitement et configuré pour réaliser un filtrage passe-haut sur le signal de détermination initial à l'aide d'un facteur de filtrage passe-haut ;

un filtre passe-bas (140) agencé en aval du module de prétraitement en parallèle avec le filtre passe-haut et configuré pour réaliser un filtrage passe-bas sur le signal de détermination initial à l'aide d'un facteur de filtrage passe-bas ; et

un module de détermination (150) configuré pour déterminer un coefficient d'état de la route sur la base d'un signal de détermination initial obtenu à la suite du filtrage passe-bas et d'un signal de détermination initial obtenu à la suite du filtrage passe-haut ;

le module de détermination (150) comprenant un sous-module d'analyse (151) et un sous-module de détermination de coefficient (152), le sous-module d'analyse (151) étant configuré pour obtenir, par analyse de Fourier, une première amplitude et une première fréquence du signal de détermination initial obtenu à la suite du filtrage passe-haut et une deuxième amplitude et une deuxième fréquence du signal de détermination initial obtenu à la suite du filtrage passe-bas ; et le sous-module de détermination de coefficient (152) étant configuré pour déterminer le coefficient d'état de la route sur la base de la première amplitude, de la première fréquence, de la deuxième amplitude, et de la deuxième fréquence.

**2.** Dispositif (100) de détermination de l'état de la route selon la revendication 1, dans lequel le module d'obtention (110) est connecté à un bus de données de véhicule, et sélectionne un signal connexe associé à l'état de la route à partir du bus de données de véhicule ; le module d'obtention (110) calcule le signal d'accélération verticale de centre de route de chaque roue sur la base du signal connexe ; et le signal connexe est sélectionné dans le groupe suivant : un signal d'accélération verticale de caisse de véhicule, un signal de course d'amortisseur, un signal d'unité de mesure inertielle, et un signal d'accélération verticale de roue.

**3.** Dispositif (100) de détermination de l'état de la route selon l'une quelconque des revendications 1 à 2, dans lequel le module de prétraitement (120) comprend un filtre passe-bas supplémentaire configuré pour réaliser, avant que le signal de détermination initial ne soit délivré au filtre passe-bas (140) et au filtre passe-haut (130), un filtrage passe-bas sur le signal de détermination initial à l'aide d'un facteur de filtrage initial.

**4.** Dispositif (100) de détermination de l'état de la route selon la revendication 3, comprenant en outre un module de détermination de facteur de filtrage (160) configuré pour définir le facteur de filtrage initial, le facteur de filtrage passe-haut, et le facteur de filtrage passe-bas sur la base d'un signal d'état de véhicule, le signal d'état de véhicule comprenant un signal de vitesse de véhicule et un signal de démarrage/d'arrêt de véhicule.

**5.** Dispositif (100) de détermination de l'état de la route selon la revendication 4, dans lequel le module de détermination de facteur de filtrage (160) est configuré pour déterminer le facteur de filtrage initial, le facteur de filtrage passe-haut, et le facteur de filtrage passe-bas selon la formule suivante :

$$\begin{cases} FrqD = min\{k_{FrqD} * v, FrqD_M\} \\ HFrqD = max\{k_{HFrqD} * v, HFrqD_M\} \\ LFrqD = k_{LFrqD} * v \end{cases}$$

$FrqD$ représentant le facteur de filtrage initial ;
$HFrqD$ représentant le facteur de filtrage passe-haut ;
$LFrqD$ représentant le facteur de filtrage passe-bas ;
$v$ représentant une vitesse de véhicule ; et
$k_{FrqD}$, $k_{HFrqD}$, $k_{LFrqD}$, $FrqD_M$, $HFrqD_M$ étant des constantes prédéfinies.

**6.** Procédé de détermination de l'état de la route, exécutable par le dispositif (100) de détermination de l'état de la route selon l'une quelconque des revendications 1 à 5, le procédé comprenant les étapes suivantes :

S100 : obtention d'un signal d'accélération verticale de centre de roue de chaque roue et d'un signal de détermination initial susceptible de caractériser une fluctuation de chaque signal d'accélération verticale de centre de roue ;
S200 : réalisation d'un filtrage passe-haut sur le signal de détermination initial à l'aide d'un facteur de filtrage passe-haut prédéfini, et réalisation d'un filtrage passe-bas sur le signal de détermination initial à l'aide d'un facteur de filtrage passe-bas prédéfini ; et
S300 : détermination d'un coefficient d'état de la route sur la base d'un signal de détermination initial obtenu à la suite du filtrage passe-haut et d'un signal de détermination initial obtenu à la suite du filtrage passe-bas ;
l'étape S300 comprenant les sous-étapes suivantes :

S310 : par analyse de Fourier, obtention d'une première amplitude et d'une première fréquence du signal de détermination initial obtenu à la suite du filtrage passe-haut, et obtention d'une deuxième amplitude et d'une deuxième fréquence du signal de détermination initial obtenu à la suite du filtrage passe-bas ;
S320 : recherche d'une première amplitude, d'une première fréquence, d'une deuxième amplitude, et d'une deuxième fréquence de chaque roue de même côté situées d'un même côté d'un véhicule, et détermination d'un coefficient d'état latéral de la route de chaque côté du véhicule sur la base de la première amplitude, de la première fréquence, de la deuxième amplitude, et de la deuxième fréquence ; et
S330 : calcul d'une moyenne pondérée du coefficient d'état latéral de la route de chaque côté du véhicule en tant que coefficient d'état de la route.

**7.** Procédé de détermination de l'état de la route selon la revendication 6, dans lequel l'étape S100 comprend les sous-étapes suivantes :

S110 : obtention d'une valeur d'écart de chaque signal d'accélération verticale de centre de roue à chaque instant par rapport à un signal d'accélération verticale de centre de roue moyen au sein d'un intervalle de temps prédéfini ; et

S120 : réalisation d'un filtrage passe-bas sur la valeur d'écart à l'aide d'un facteur de filtrage initial prédéfini, afin de générer le signal de détermination initial.

8. Procédé de détermination de l'état de la route selon la revendication 6, dans lequel le sous-étape S320 comprend les étapes suivantes :

S321 : obtention d'une moyenne d'amplitudes de la première amplitude et de la deuxième amplitude de chaque roue de même côté, et obtention d'une moyenne de fréquences de la première fréquence et de la deuxième fréquence de chaque roue de même côté ;

S322 : calcul d'une moyenne pondérée de la moyenne d'amplitudes de chaque roue de même côté en tant qu'amplitude pondérée, et calcul d'une moyenne pondérée de la moyenne de fréquences de chaque roue de même côté en tant que fréquence pondérée ; et

S323: calcul d'une moyenne quadratique d'un produit de l'amplitude pondérée et de la fréquence pondérée en tant que coefficient d'état latéral de la route.

9. Support de stockage lisible par ordinateur sur lequel est stocké un programme d'ordinateur, l'exécution du programme d'ordinateur par un processeur entraînant la mise en œuvre d'un procédé de détermination de l'état de la route selon l'une quelconque des revendications 6 à 8.

100

FIG. 1

| | |
|---|---|
| Obtain a wheel center vertical acceleration signal of each wheel and an initial determining signal capable of characterizing a fluctuation of the wheel center vertical acceleration signal | S100 |
| Perform high-pass filtering on the initial determining signal by using a preset high-pass filtering factor, and perform low-pass filtering on the initial determining signal by using a preset low-pass filtering factor | S200 |
| Determine a road condition coefficient based on an initial determining signal obtained after high-pass filtering and an initial determining signal obtained after low-pass filtering | S300 |

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19804005 C2
- US 20190359203 A1